# EUROPÄISCHE PATENTSCHRIFT

(11) **EP 2 651 537 B1**
(45) Veröffentlichungstag und Bekanntmachung des Hinweises auf die Patenterteilung: **12.04.2017**
(21) Anmeldenummer: 11788183.9
(22) Anmeldetag: 28.11.2011
(51) Int. Cl.: B01D 53/50, B01D 45/06, B01D 45/08

(54) **ROLLENABSCHEIDER ZUR VERMEIDUNG VON SCHORNSTEINREGEN**
TUBE SEPARATOR FOR PREVENTING STACK RAIN
SÉPARATEUR À ROULEAUX POUR EMPÊCHER LES PLUIES DE CHEMINÉE

(30) Priorität: 17.12.2010 DE 202010016752 U
(43) Veröffentlichungstag der Anmeldung: 23.10.2013
(73) Patentinhaber: REA Plastik Tech GmbH, 16816 Neuruppin (DE)
(72) Erfinder: NEUBAUER, Georg, 14624 Seeburg (DE); WEBER, Detlef, 45147 Essen (DE)
(74) Vertreter: Kluin, Jörg-Eden
(86) Internationale Anmeldenummer: PCT/EP2011/071185
(87) Internationale Veröffentlichungsnummer: WO 2012/079966

(56) Entgegenhaltungen:
- DE-U1-202005 002 674
- DE-U1-202009 004 019
- DE-U1-202010 007 266

## Beschreibung

Die Erfindung bezieht sich auf ein Tropfenabscheidersystem für den Einsatz in Rauchgasentschwefelungen von Kraftwerken. Dieses Abscheiderkonzept soll einerseits den Erfordernissen der neuen Emissionsvorschriften in Europa und USA gerecht werden und die darin geforderte Abscheideleistung erbringen. Andererseits soll dieses Konzept das bekannte Problem des Schornsteinregens (starker Tropfenauswurf aus einem Nasskamin) überwinden. Darüber hinaus soll dieses Abscheiderkonzept die Verschmutzung der dem Tropfenabscheider (in Rauchgasstromrichtung) folgenden Komponenten minimieren.

Rauchgase aus fossil befeuerten thermischen Kraftwerken werden vorwiegend nach dem Nasswaschverfahren entschwefelt. Das schwefelhaltige Rauchgas wird mit Kalksteinmilch (Suspensionslösung) besprüht und das im Rauchgas befindliche SO₂ in den Sprühtropfen dieser Suspensionslösung gebunden und dann in Calziumsulfitdihydrat (Gips) umgewandelt. Die kleineren dieser Sprühtropfen werden durch den Gasstrom mitgeführt.

Es ist die Aufgabe des Tropfenabscheidersystems, diese im Rauchgasstrom mitgeführten Tropfen abzufangen und in den Wäscherkreislauf zurückzuführen. Andernfalls kommt es in den nachgeschalteten Komponenten (Wärmetauscher, Rauchgaskanäle, Nassgebläse, Schornstein usw.) zu Anbackungen und infolge zu Korrosion und Druckverlusterhöhung. Die Folge sind Leistungsminderung des Kraftwerks (Druckverlusterhöhung verursacht erhöhten Stromeigenverbrauch und ggf. auch eine Reduzierung der Erzeugung) und Wartungskosten (Sanierung von Korrosionsstellen und Reinigungskosten zur Entfernung der Anbackungen).

Die neuen in Europa und USA gültigen oder geplanten Emissionsvorschriften sehen weiter eine erhebliche Reduzierung der Feststoffanteile im Rauchgas vor (Feinstaubreduzierung). Diese neuen Grenzwerte erzwingen eine massive Verbesserung der Abscheidung in der Rauchgasentschwefelung. Einige europäische Länder und Regionen fordern inzwischen eine Reduzierung des Feinstaub und Feststoffgehalts auf 3 - 6 mg/Nm³.

Zuletzt sind viele Kraftwerke in den USA und neuerdings auch in Europa mit einem sogenannten Nasskamin ausgerüstet. Das Rauchgas wird ohne Wiederaufheizung saturiert in den Schornstein eingeführt - aufgrund der Abkühlung auf dem Weg durch den Schornstein kondensiert Flüssigkeit und führt zu einem "nassen" Schornstein. Das Problem vieler dieser Nasskamine ist, dass große Mengen an Tropfen vom Schornstein ausgeworfen werden. Die Tropfen regnen in der unmittelbaren Nachbarschaft des Schornsteins und manchmal auch in weiteren Distanzen ab. Es werden die Anlagen des Kraftwerks verunreinigt, nahegelegene andere Einrichtungen und Gebäude verschmutzt und auch Menschen und Tiere belästigt. Da diese Tropfen eher sauer sind, führt dieser Schornsteinregen zu Korrosion und Schädigung der betroffenen Anlagen, der Lack von Autos wird zerstört, Boden versauert, Gebäudefassaden und Dächer werden durch Korrosion beschädigt usw..

Die Erfahrungen mit Schornsteinregen und die Probleme mit Feinstaubemissionen zeigen, dass die traditionell eingesetzten zweistufigen Tropfenabscheider nicht mehr ausreichend sind. Die Menge von Feststoffen (Feinstaube, Salze etc.) in den Restgehalten hinter dem Tropfenabscheider ist höher als die in diesen Grenzwerten zugelassenen Werte. Der Tropfenauswurf (Schornsteinregen) ist ein erhebliches Problem und Konfliktherd mit Nachbarn und Umweltschützern. Die Anbackungen und Verstopfungen im Rauchgasweg verursachen Kosten und reduzieren die Stromproduktion.

### Stand der Technik

Moderne Tropfenabscheider für Rauchgasentschwefelungen werden heute im Wäscherkopf oben - vor dem Austritt in die Rauchgaskanäle - installiert. Sie werden von einem vertikal nach oben strömenden Rauchgas beaufschlagt. Diese Konfiguration ist aus Kosten- wie aus Betriebsgründen die beste Konfiguration.

Das Tropfenabscheidersystem trennt dabei die Tropfen wie die trockenen Feststoffanteile vom Gasstrom, indem es den Rauchgasstrom umlenkt. Dabei werden die Tropfen und trockenen Feststoffe Zentrifugalkräften ausgesetzt. Sie können dem Rauchgas in seinem Weg nicht folgen, sondern prallen auf die Strömungswiderstände, die die Umlenkung des Rauchgasstroms verursachen. Die Tropfen werden dadurch auf diesen "Prallkörpern" abgeschieden und damit aus dem Rauchgasstrom entfernt. Die abgeschiedene Flüssigkeit fließt dann durch die Schwerkraft wieder nach unten in den Waschkreislauf zurück.

Die Tropfenabscheider sind dabei traditionell als Pakete aus plattenartigen und gebogenen Umlenkkörper konfiguriert. Diese plattenartigen, gebogenen und starr aufgehängten Umlenkkörper werden so konfiguriert, dass Kanäle gebildet werden, durch die das Rauchgas fließt. Das Ziel dieser Konfiguration ist, einerseits eine starke Umlenkung des Rauchgases zu verursachen und andererseits die "Versperrung" des Rauchgaswegs durch Strömungswiderstände zu minimieren. Die Prallkörper oder Umlenkbleche werden allgemein Lamellen genannt - und die Abscheider entsprechend Lamellenabscheider. Die gängigen Lamellenabscheider der verschiedenen Hersteller unterscheiden sich nur aufgrund ihrer Geometrie, der Lamellenabstände und der Umlenkung sowie der Bauform (Dach, Flach, oder horizontal angeströmt). In der Funktion sind sie grundsätzlich gleich.

Die Tropfenabscheidersysteme sind mindestens zweistufig ausgelegt. Die Betriebserfahrung zeigt, dass ein einstufiges Abscheidersystem grundsätzlich nicht ausreichend ist, um die Tropfen sicher aus dem Rauchgas zu entfernen. Auch zweistufige Tropfenabscheider (Grobabscheider und Feinabscheider) entlassen aber noch eine erhebliche Menge an Tropfen mit Feststoffen mit dem Rauchgas - häufig zuviel für die Anforderungen der Umweltauflagen, die Betriebserfordernisse und den Betrieb eines Nasskamins.

Deswegen werden inzwischen viele Tropfenabscheider dreistufig gebaut (siehe z.B. DE102006011185). In dieser Konfiguration wird die eigentliche Abscheidung vom Grobabscheider und vom Feinabscheider durchgeführt. Der Grobabscheider nimmt die Masse der Tropfen aus dem Rauchgas und erreicht Abscheidegrade von teilweise deutlich über 90%. Der Feinabscheider entnimmt einerseits weitere Tropfen aus dem Rauchgas, fängt die Tropfen aus der Waschung des Grobabscheiders ab und fängt auch noch einen großen Teil der Sekundärtropfen ab, die beim Aufprall eines Tropfens in der Lamelle des Grobabscheiders entstehen können (Reflektionstropfen).
Der dritte oder "Feinstabscheider" hat drei Funktionen.
1. Feinsttropfen
   Der Feinstabscheider filtert weitere Feinsttropfen aus dem Rauchgas, die Grob- und Feinabscheider passieren konnten. Die Flüssigkeits- und Feststoffmenge dieser Feinsttropfen ist aber sehr gering. Daher ist diese Feinstabscheidung von geringerer Bedeutung.
2. Störungen
   Der Feinstabscheider scheidet Tropfen ab, die aufgrund von Störungen aus dem Feinabscheider durchreißen. Die Ursache derartiger Störungen sind entweder die Verschmutzung von Grob- und Feinabscheider, die zu Durchriss führt oder eine erhebliche Ungleichverteilung des Rauchgasstroms, die zu lokalen Geschwindigkeitsspitzen führt, die die Leistungsfähigkeit der beiden ersten Abscheider beeinträchtigt. Bei modernen Rauchgasentschwefelungsanlagen ist dies aber eher selten der Fall, daher ist auch diese Funktion von eher geringerer Bedeutung.
3. Waschen Feinabscheider
   Der Feinstabscheider scheidet die Waschflüssigkeit ab, die beim Waschen des Feinabscheiders aus diesem herausgerissen wird. Es ist aus vielen Messungen bekannt, dass das Waschen des Feinabscheiders zu einer erheblichen Emission von Tropfen führt. Messungen im Labor wie Garantiemessungen im Kraftwerk haben zum Ergebnis geführt, dass 60% bis 80% der Flüssigkeitsmenge nach dem Feinabscheider während des Waschens des Feinabscheiders emittiert wird. Die Abscheidung dieser Waschtropfen ist die Hauptfunktion des Feinstabscheiders.

### Feinstaubemissionen / Schornsteinregen

Die Frage der Feinstaubemissionen hat in den letzten Jahren erhebliche Aufmerksamkeit gewonnen und es wurden in vielen Ländern die Auflagen für Feinstaubemissionen verschärft. Das Ziel ist natürlich der Schutz der Gesundheit der Menschen.

Ein zweiter Grund für die Diskussion sind die geplanten Anlagen für die CO₂ Reduzierung. Viele CO₂ Abscheidetechniken erfordern einen sehr geringen Feinstaubanteil im Rauchgas. Es handelt sich um die Verfahren, die das CO₂ in Packungen und Füllkörpern und über Bindemittel abscheiden. Feststoffe aus dem Rauchgas verschmutzen und verstopfen die Abscheideanlagen und sind deshalb störend.

Zuletzt ist die Aufmerksamkeit auf Feinstäube durch das Problem des Schornsteinregens aus Nasskaminen in den Focus gerückt. Die sauren Regen aus Schornsteinen führen zu Verschmutzungen und korrosiven Schäden im direkten Umfeld der Schornsteine und zu entsprechenden Konflikten mit Anwohnern.

Die Tropfenabscheider sind natürlich im Zentrum des Interesses, da sie ja für die Abscheidung und damit für die Reduzierung der Feinstaubemissionen verantwortlich sind. Hohe Feinstaubemissionen, Schornsteinregen und Probleme in der CO₂ Abscheidung werden deshalb zu Recht auf "schlechte" Abscheidung von Tropfen in der Rauchgasentschwefelungsanlage zurückgeführt.

Der Schornsteinregen steht dabei in der direkten Aufmerksamkeit bei vielen Kraftwerken. Der Schornsteinregen ist für Mitarbeiter, Anwohner und industrielle Nachbarn der Kraftwerke sofort sichtbar und die negativen Folgen (Verschmutzung und Korrosion) schnell feststellbar.

Dieser Schornsteinregen besteht aus großen Tropfen mit erheblichen Feststoffgehalten (Gips und Kalkstein) und ist sauer (leichter Säuregehalt). Die Tropfen sind auf spiegelnden Oberflächen (auf einem Auto) sofort erkennbar. Die schnell einsetzende Korrosion ätzt den Lack von Fahrzeugen ab und führt zu Schäden in Gärten, Gebäuden und Anlagen.

In den USA war Schornsteinregen schon Gegenstand vieler Gerichtsverfahren und juristischer Konflikte zwischen den Kraftwerksbetreibern auf der einen und Anwohnern, Umweltschützern und Umweltbehörden auf der anderen Seite.

Die Konzentration auf den Schornsteinregen kann also sowohl durch das reine Flüssigkeitsvolumen als auch durch die Größe der Tropfen erklärt werden. Kleine Tropfen, die entweder durch den Tropfenabscheider im Normalbetrieb (ohne Waschen) durchreißen oder kleine Tropfen, die durch Kondensation im Schornstein entstehen, fallen nicht als Schornsteinregen auf, weil sie normalerweise verdunsten, bevor sie den Boden erreichen. Die Strecke von Schornsteinspitze und Boden ist dafür groß genug. Weiter führt die Menge der Tropfen beim Waschen dazu, dass der Schornsteinregen wahrgenommen wird. Einzelne Tropfen würden ignoriert und nicht wahrgenommen.

Die Thematik des Schornsteinregens ist bei den älteren europäischen Kraftwerken nicht bekannt, weil die Wiederaufheizung dieses Problem vermieden hat. Allerdings wurde immer wieder ein scheinbar anderes Problem in diesen Kraftwerken relevant - der Feinstaubauswurf. Die Kraftwerke messen den Staubgehalt im Rauchgas am Schornstein. Es kam dabei immer wieder zu Spitzen im Staubauswurf, die zu Konflikten mit den Aufsichtsbehörden führte.

Dieses Feinstaubproblem ist ähnlich zu erklären wie der Schornsteinregen bei den älteren amerikanischen Kraftwerken oder jetzt den neusten europäischen Kraftwerken. Bei den älteren europäischen Kraftwerken sorgt die Wiederaufheizung dafür, dass die Tropfen alle verdunsten, bevor sie die Spitze des Schornsteins erreichen. Die Masse der Tropfen wird gleich im Wärmetauscher verdampft, indem die Tropfen auf die Flächen des Wärmetauschers auftreffen und verdunsten. Andere Tropfen können durch den Wärmetauscher gelangen, sind dann aber einerseits stark geschrumpft und befinden sich andererseits in nicht mehr saturiertem Gas, so dass weiter Flüssigkeit vom warmen Rauchgas aufgenommen und verdunsten kann.

Als Folge dieses Verdunstens bilden sich Ablagerungen auf den Wärmetauscherflächen, die von dort abgeblasen werden müssen. Einerseits reicht dieses Blasen nicht aus, um die Wärmetauscher sauber zu halten - es kommt zu einem Anstieg des Druckverlusts und manchmal sogar zu einem Abfahren des Kraftwerks wegen des Druckverlusts. Andererseits werden die abgeblasenen Staubmengen durch den Schornstein in die Atmosphäre entsorgt. Der negative Umwelteffekt ist ebenso gegeben, wie beim Schornsteinregen.

### Analyse Schornsteinregen

Bei der Analyse der Feinstaubmengen hat der Schornsteinregen den Vorteil, dass sich die Emissionen besonders gut beobachten lassen und die Analyse der Ursachen für die Emissionen einfacher gestaltet. Außerdem ist der Schornsteinregen für viele Kraftwerke und deren Anwohner ein direktes Problem. Daher die Konzentration auf diesen Effekt. Der Schornsteinregen steht aber stellvertretend auch für die anderen Arten von Feinstaubemissionen.

Die bekannten Ursachen des Schornsteinregens sind schlechte Abscheidung und Kondensation. Schlechte Abscheidung bedeutet, dass viele Tropfen durch den Tropfenabscheider durchreißen und Flüssigkeit in den Schornstein eintragen, die dann als Schornsteinregen emittiert wird. Weitere Tropfen entstehen durch Kondensation, weil sich das Rauchgas im Schornstein abkühlt und aus dem gesättigten Rauchgas Kondensationstropfen ausfallen.

Eine schlechte Abscheideleistung ist offensichtlich eine mögliche Ursache für Schornsteinregen. Die Kraftwerke konnten weiter erkennen, dass Schornsteinregen mit der Verschmutzung der Tropfenabscheider zusammenhängt. Verschmutzte Tropfenabscheider führen zu einem verstärkten Schornsteinregen. Diese Verschmutzungen ergaben sich wiederum durch eine Vielzahl von konstruktiven und betrieblichen Fehlern. Eine erhebliche Ungleichverteilung der Rauchgasströme kann ebenso zu lokalen Verschmutzungen führen, wie ein Ausfall von Teilen des Waschsystems. Der Einsatz von ungünstig konstruierten Abscheidern ist ebenso als Ursache bekannt, wie falsche Betriebsweise der Wascheinrichtungen usw.

Ein verschmutzter Abscheider funktioniert nun nur noch sehr eingeschränkt. Die Anbackungen und Verschmutzungen wirken als regelrechte "Absprungschanzen" für Tropfen. Die gerade abgeschiedenen Tropfen werden also wieder in das Rauchgas zurückgeworfen und fliegen weiter.

Diese Erkenntnis führte dazu, dass die Kraftwerke systematisch die "schlechten" Abscheider verbesserten, überholten und umbauten. Diese Kraftwerke konnten dadurch das Problem erheblich reduzieren.

Trotz der Verbesserung der Abscheider blieb der Schornsteinregen ein Problem - er konnte nicht völlig beseitigt werden.

Als zweite Ursache dieses Schornsteinregens wurde Kondensation von Tropfen aus dem saturierten Rauchgas ausgemacht. Das Rauchgas kühlt sich auf dem Weg durch den Schornstein ab. Auch wenn diese Abkühlung weniger als nur 1 Kelvin beträgt, so ist der Effekt doch erheblich, da das Rauchgas fast vollständig saturiert ist. Schon die Abkühlung von 1 K kann im Verlauf einer Stunde und bei einem großen Rauchgasvolumen für Kondensationsmengen von mehreren Tonnen Kondensat sorgen. Damit schien die Ursache des verbleibenden Schornsteinregens klar und nachvollziehbar.

Diese "Vermutung" muss jedoch hinterfragt werden. Kondensation kann nicht die Ursache für die beobachteten Schornsteinregeneffekte sein. Die kurze Reisezeit im Schornstein reicht nicht aus, um große Tropfen zu bilden. Bei Reisezeiten von 10 - 20 Sekunden im Schornstein und Temperaturunterschieden von weniger als 1 K bilden sich zwar sehr viele sehr kleine Kondensationskeime aber keine großen Tropfen. Schornsteinregen besteht allerdings aus großen Tropfen. Die Tropfen müssen groß sein, damit sie einerseits durch Schwerkraft den Boden erreichen müssen (abregnen) und andererseits nicht in der Umgebungsluft wieder verdunsten. Sowohl die kalte, trockene Luft im Winter als auch die warme Umgebungsluft im Sommer ist in der Lage große Flüssigkeitsmengen aufzunehmen. Kleine Tropfen sind daher schon nach 5 - 30m verdunstet.

Es wurde in Erkenntnis dieser Tatsache die Hypothese aufgestellt, dass sich viele Tropfen an der Schornsteinwand niederschlagen und sich so zu großen Tropfen sammeln. Diese werden dann durch den Rauchgasstrom aus dem Flüssigkeitsfilm gerissen und als große Tropfen emittiert. Solche Effekte können in der Tat beobachtet werden, allerdings reichen sie nicht als Erklärung für die großen Tropfen- und Feststoffmengen aus, die manchmal aus Schonsteinen regnen.

Ein wichtiger Aspekt ist dabei der hohe Feststoffgehalt des Schornsteinregens. Die Tropfen hinterlassen auf glatten Flächen - zum Beispiel auf Dächern und Kühlerhauben von Autos große weiße Flecken. Es handelt sich offensichtlich um Gips und Kalkstein. Der im Rauchgas befindliche Gips und Kalksteingehalt (Feinstaub) ist eher gering. Kondensat allerdings kann nur wenig Feststoffe enthalten - denn es entsteht ja durch Auskondensieren von Flüssigkeit aus dem gesättigten und übersättigten Rauchgas. Es ist unwahrscheinlich, dass die Kondensattropfen dann hohe Feststoffmengen aus dem Rauchgas anziehen und aufsaugen - schließlich sind da ja nur wenige nicht in Flüssigkeit gebundene Feststoffe im Rauchgas und auch die in Feinsttropfen gebundenen Feststoffe sind nur geringe Mengen - relativ zu den angenommenen Kondensatmengen. Der hohe Feststoffanteil des Schornsteinregens weist daher daraufhin, das nicht Kondensation der entscheidende Faktor ist.

Es muss also neben schlechter Abscheidung und Kondensation einen dritten Effekt geben, der Flüssigkeit (und Feststoffe) in den Schornstein führt und Schornsteinregen verursacht. Das Waschen des Tropfenabscheiders, insbesondere das Waschen des Feinabscheiders wurde als entscheidende Ursache des Schornsteinregens erkannt.

### Waschen des Tropfenabscheiders

Die Verbindung zwischen dem Waschen des Tropfenabscheiders und der Feinstaubemission bzw. des Schornsteinregens wurde lange Zeit nicht erkannt. Schornsteinregen und Feinstaubemissionen wurden als "schlechte" Abscheidung erkannt und bekämpft. Vielfach war dies auch tatsächlich die Hauptursache und durch Maßnahmen konnten erhebliche Verbesserungen (Reduzierungen) erreicht werden. Schornsteinregen blieb aber auch danach ein Problem.

Es konnte in Versuchen nun gezeigt werden, dass die Stärke des verbleibenden Schornsteinregens weitgehend von den Waschzyklen der Tropfenabscheider und zwar insbesondere vom Waschen des in Richtung der Rauchgasströmung letzten Tropfenabscheiders abhängt. Es konnte festgestellt werden, dass ein Abschalten dieses Waschsystems dazu führte, dass der vorher kräftige Schornsteinregen auf ein kaum wahrnehmbares Maß zurück ging.

Diese Feststellung steht auch in Übereinstimmung mit den Messungen des Durchriss hinter den Tropfenabscheidern. Sowohl in Labormessungen als auch bei den Garantiemessungen in Kraftwerken wurde festgestellt, dass während des Waschens des in Rauchgasströmungsrichtung letzten Tropfenabscheiders das zirka 100fache der Flüssigkeitsmenge durchriss, wie bei Betrieb ohne Waschung.

Zuletzt wurde festgestellt, dass die Größe der Tropfen während des Waschens erheblich größer ist als bei normalem Betrieb. Es wurden besonders große Tropfen mitgerissen. Der Waschdurchriss bestand aus Tropfen, die groß genug sind, um nach Auswurf aus dem Schornstein einerseits den Boden zu erreichen und andererseits dort als große Tropfen wahrgenommen zu werden.

Es war für lange Zeit vermutet worden, dass die Waschflüssigkeit ja saubere und weitgehend von Feststoffen freie Flüssigkeit sei. Deshalb schien Waschen als Ursache für die mit Feststoff belasteten Schornsteintropfen auszuscheiden. Allerdings ist diese Sauberkeit nicht der Fall. Das Waschen hat ja den Zweck, die Ablagerungen (Feststoffe) im Prallkörper zu lösen und aus dem Prallkörpersystem zu entfernen. Entsprechend enthält der Flüssigkeitsfilm, der während des Waschens entsteht, einen hohen und bei Verschmutzung sogar einen sehr hohen Feststoffanteil. Sekundärtropfen, die aus diesem Flüssigkeitsfilm gerissen und mit dem Rauchgas weiter geführt werden, können deshalb hohe Feststoffgehalte haben - theoretisch und praktisch sogar mehr als der Feststoffgehalt der Suspensionslösung.

Der Feststoffanteil hängt dabei offensichtlich vom Verschmutzungsgrad der Prallkörper ab. Ein relativ sauberer Prallkörper wird beim Waschen nur relativ wenige Feststoffe emittieren und ein stark verschmutzter Prallkörper wird beim Waschen eine hohe Feststofffracht emittieren. Die Feststofffracht des Tropfenauswurfs beim Waschen ist also betriebs- und anlagenabhängig.

Eine Versuchsserie bei einem industriellen Kraftwerk zeigte die Wirkung des Waschens auf den Schornstein. Der Tropfenabscheider wurde erneuert, um dessen Funktion sicher zu stellen. Dann wurde die Rauchgasentschwefelungsanlage einen Tag ohne Waschen der Tropfenabscheider betrieben. Danach war der Schornstein relativ trocken und es gab keinen Schornsteinregen mehr. Nachdem das Waschen der Tropfenabscheider wieder eingeschaltet worden war, begann der Schornsteinregen nur zirka 60 Sekunden nach Neustart des Waschens.

### Dreistufiger Abscheider - Stand der Technik

Diese Erkenntnisse haben dazu geführt, dass moderne Tropfenabscheidersysteme mit einem dritten Tropfenabscheider (Feinstabscheider) gebaut werden. Die Aufgabe dieses dritten Abscheiders ist es in erster Linie, den Durchriss des Waschens des Feinabscheiders abzuscheiden.

Alleine dadurch kann der Durchriss an Feinstaub mehr als halbiert werden. Dieser Vorteil entsteht, weil der dritte Tropfenabscheider gar nicht oder nur noch selten gewaschen wird. Der Überriss beim Waschen entsteht nicht mehr.

Diese Überlegung war auch durchaus richtig. Es wurde durch das seltene Waschen erreicht, dass die nach dem Tropfenabscheider gemessene Flüssigkeitsmenge deutlich reduziert werden konnte. Wo vorher noch 30 - 50 mg/Nm³ übliche Grenzwerte für die Abscheideleistung eines zweistufigen Abscheiders waren, kann jetzt von 10 - 20 mg/Nm³ ausgegangen werden. Entsprechend konnte durch den dreistufigen Abscheider eine Reduzierung der Feinstaubwerte erzielt werden.

Es kam aber auch bei vielen dieser Anlagen zu Betriebsproblemen. Man stellte fest, dass der dritte Abscheider nicht ohne regelmäßiges Waschen auskam. Der Abscheider verschmutzte über mehrere Monate des Betriebszyklus ganz erheblich und sorgte für einen massiven Anstieg des Druckverlustes.

In einigen Anlagen wurde sogar festgestellt, dass sogar trotz eines täglichen Waschens immer noch eine fortschreitende Verschmutzung der Lamellen im dritten Abscheider eintrat. Das einmalige Waschen pro Tag war offensichtlich nicht ausreichend, um die im Verlauf von einem Tag aufgebauten Verschmutzungen wieder aus den Lamellen zu waschen. In einzelnen Fällen war die Verschmutzung des dritten Tropfenabscheiders so stark, dass Elemente des Tropfenabscheiders durch das Gebläse aus ihrer Position geblasen wurden oder dass der Druckverlust so stark wurde - schon nach wenigen Monaten - dass das Kraftwerk abfuhr, um manuell zu reinigen. Dabei war "nur" der dritte Abscheider verschmutzt.

Und natürlich wurde Schornsteinregen beobachtet. Zwar war dieser Schornsteinregen deutlich geringer als bei Anlagen mit zwei Tropfenabscheidern, reichte aber aus, um sowohl im Betrieb als auch bei einigen Nachbarn aufzufallen. Die Ursache dieses Schornsteinregens war einerseits das noch notwendige Waschen und andererseits eine unzureichende Funktion des verschmutzten Abscheiders.

Das Ergebnis war also unbefriedigend, einerseits wurde zwar die Gesamtemission reduziert (vorteilhaft), aber andererseits wird die restliche Emission in einer Form emittiert, die zu Konflikten mit Aufsichtsbehörden und Umweltschützern führen muss, weil die Emission (Schornsteinregen) auch ohne Messgeräte erkennbar und für den Laien fühlbar geworden ist. Der Schornsteinregen setzt sich auf Autos, glatten Flächen und Pflanzen ab und ist wegen der weißen Gipsanteile auch für den Laien sofort zu erkennen.

Damit ist das Gegenteil von dem eingetreten, was das Interesse der Kraftwerke sein muss. Durch die Reduzierung der Emissionen soll nicht nur den Auflagen und der Umwelt Genüge getan werden, sondern auch das Image der Kraftwerke in der Öffentlichkeit verbessert werden. Durch den Schornsteinregen tritt jedoch das Gegenteil ein. Die Reduzierung der Emissionen führt wegen der Verbindung mit dem Wechsel zum Nasskamin zu für Laien wahrnehmbaren und sichtbaren Verschmutzungen. Ein Konflikt ist vorprogrammiert.

Die Betriebserfahrungen mit den dreistufigen Abscheidern lassen sich also wie folgt zusammenfassen:
1. Emissionen reduziert
   Durch den Einsatz des dritten Tropfenabscheiders können die Emissionen von Feinstaub deutlich reduziert werden.
2. Verschmutzung des Feinstabscheiders
   Der Feinstabscheider verschmutzt über die Zeit und der Druckverlust steigt an. Je nach Betriebsweise kann der Betrieb nicht über die gewünschte Reisezeit sichergestellt werden.
3. Waschen des Feinstabscheiders
   Das Waschen des Feinstabscheiders kann nicht immer gegen das Verschmutzen sichern, ist aber notwendig, um der Anlage eine längere Reisezeit zu erlauben.
4. Schornsteinregen
   Durch das leider unvermeidbare Waschen des Feinstabscheiders bzw. die Verschmutzung kommt es bei Nasskaminen zu Schornsteinregen. Damit sind Konflikte mit Umweltbehörden und Umweltschützern programmiert.

Das Konzept des dreistufigen Abscheiders kann zwar als eine Verbesserung des bisher üblichen Abscheiders gewertet werden, allerdings wurde das eigentliche Ziel nicht erreicht. Es war das Ziel des dreistufigen Abscheiders, auf das Waschen des dritten Abscheiders völlig zu verzichten. Die beiden ersten Abscheider sollten so effizient abscheiden, dass nur noch sehr geringe Feststoffmengen zum dritten Abscheider gelangen und deshalb dieser nicht mehr verschmutzen würde. Wegen der geringen Verschmutzung wäre dann auch kein Einsatz des Waschsystems mehr notwendig.

Diese Annahme hat sich im Betrieb aber leider als falsch heraus gestellt. Entweder der dritte Abscheider wird häufig gewaschen oder es kommt zu starken Verschmutzungen bis hin zur Verstopfung. Beides produziert Schornsteinregen

Inzwischen wird deshalb überlegt, die Tropfenabscheider als vierstufigen Abscheider zu konfigurieren. Dann soll der vierte Abscheider nunmehr in der Betriebsweise gefahren werden, die bisher dem dritten zugedacht war. Der dritte wird häufiger gewaschen, bleibt deshalb sauber und es besteht keine Gefahr der Verschmutzung mehr. Der vierte Abscheider soll nicht oder nur äußerst selten gewaschen werden. Dies soll dadurch möglich werden, weil durch den dritten Abscheider so viel Feststoff zusätzlich entfernt wird dass dadurch die Verschmutzung des vierten Abscheiders so langsam vor sich geht, dass das Waschen nur noch äußerst selten notwendig wird.

Es ist zwar damit zu rechnen, dass eine vierte Abscheiderstufe zu einer weiteren Verbesserung der Situation führt. Der Feststoffanfall im vierten Abscheider wird noch geringer ausfallen als im dritten Abscheider. Es ist aber davon auszugehen, dass es weiter zu Verschmutzungen kommen wird und durch Waschen oder verschmutzte Abscheider erhöhte Feinstaubemissionen oder Schornsteinregen verursacht wird.

### Konzepte für Tropfenabscheider

Es sind einige Konzepte bekannt, um auf die gestiegenen Anforderungen des Emissionsschutzes und der Betriebssicherheit zu reagieren.

Ein besonders erfolgreiches Konzept ist der sogenannte "Rollenabscheider". Der Rollenabscheider verwendet Rohrsegmente als Prallkörper - im Gegensatz zu den konventionellen Lamellenabscheidern, die extrudierte und besonders geformte Profile verwenden.

Dieser Rollenabscheider erwies sich im Betrieb als besonders resistent gegen Verschmutzungen und Anbackungen und kann in einigen Anlagen sogar ohne Waschsysteme betrieben werden. Der Rollenabscheider bringt trotzdem noch eine akzeptable Abscheideleistung.

Der Rollenabscheider wird allerdings bisher nur als Grobabscheider eingesetzt. Beim Einsatz als Feinabscheider ist der Lamellenabscheider in der Abscheideleistung überlegen, da die Lamelle auch effizient kleine Tropfen abscheidet.

Diese besonderen Charakteristika - verschmutzungsresistent sogar ohne Waschsystem und effizient bei großen Tropfen - machen den Rollenabscheider interessant.

Aus der DE 20 2009 004 019 U1 ist ein Grobabscheider bekannt, der Rollenabscheider umfasst.

Die DE 20 2010 007 266 U1 zeigt einen Grobabscheider mit Rollenabscheider und vorgelagerten Halbschalen.

Die DE 20 2005 002 674 U1 zeigt einen Abscheider, bei dem auf einen Rollenabscheider zwei Lamellenabscheider folgen.

### Aufgabenstellung

Die Situation mit der unzureichenden Betriebsweise des dritten "Feinstabscheiders" ist unbefriedigend in Bezug auf die Emissionen wie auf die öffentlichkeitswirksame Darstellung.

Die Erfahrung ist weiter problematisch, wenn an die geplanten CO₂ Abscheidesysteme gedacht wird, die zukünftig an die SO₂ Abscheidung anschließen sollen. Die meisten der derzeit in Erprobung befindlichen Systemkonzepte basieren auf chemisch-thermischen Prozessen, die mit großen Kontaktflächen arbeiten. Dies erfordert eine hohe Reinheit des Rauchgases bzw. die weitgehende Entfernung der Feinstäube und Feststoffanteile aus dem Rauchgas. Die Feststoffe würden sonst über relativ kurze Zeit die Kontaktflächen belegen und irgendwann zur Verstopfung der Festbetten führen.

Die Aufgabenstellung muss daher sein, eine Abscheidekonzeption zu finden, die drei Bedingungen erfüllt:
1. Es wird eine hohe Abscheideleistung dauerhaft gewährleistet.
   Es kommt also nicht durch fortschreitende Verschmutzung zu einer Reduzierung der Abscheideleistung.
2. Es wird Waschüberriss vermieden.
   Der Waschüberriss, der bei konventionellen Anlagen für 60% bis 70% des gesamten Flüssigkeitsüberriss verantwortlich war, wird vermieden und dadurch die Reinigungsleistung in Bezug auf Feinstaub verdoppelt.
3. Es kommt zu keinem Anstieg im Druckverlust.
   Der durch fortschreitenden Aufbau von Anbackungen entstehende Anstieg im Druckverlust wird vermieden.

Die Erfindung soll eine Abscheideleistung garantieren, die den Anforderungen der neuen Emissionsvorschriften entspricht und die oben beschriebenen Fehleffekte (Schornsteinregen als Folge von verschmutztem Feinstabscheider oder durch Waschen des Feinstabscheiders) vermeidet. Dabei wird Wert darauf gelegt, dass den betrieblichen Anforderungen (Begehbarkeit und Wartungsmöglichkeit) Rechnung getragen wird. Insbesondere soll die vorgeschlagene Konfiguration die drei vorher genannten Aufgabenstellungen erfüllen.

### Erfindung

Das erfindungsgemäße Abscheidersystem umfasst vorzugsweise drei oder vier Abscheiderlagen, wobei die in Rauchgasrichtung erste Abscheiderlage (Grobabscheider) als Rollenabscheider oder als Lamellenabscheider ausgelegt sein kann.

Die zweite Abscheiderlage (Feinabscheider) ist vorzugsweise als Lamellenabscheider ausgelegt, um die höhere Leistung eines Lamellenabscheiders (im Vergleich zum Rollenabscheider) zu nutzen.

Bei vierstufigen oder mehrstufigen Anlagen ist die dritte (bei mehrstufigen Anlagen die weiteren mit Ausnahme der letzten) Abscheiderstufe ebenfalls vorzugsweise als Lamellenabscheider ausgelegt, um die höhere Leistung eines Lamellenabscheiders (im Vergleich zum Rollenabscheider) bei kleinen Tropfen zu nutzen.

Dabei sind auch alle Abscheiderstufen - mit Ausnahme der letzten Abscheiderstufe - mit beidseitigen Waschvorrichtungen ausgerüstet. Wobei dies bei einem Grobabscheider, der als Rollenabscheider ausgeführt wurde, nicht notwendig ist

Die letzte Abscheiderstufe ist erfindungsgemäß als Abscheider mit im Vergleich zur vorherigen Abscheiderstufe geringerer Abscheiderleistung und als Rollenabscheider ausgeführt.

Dieses Abscheidersystem erscheint nach der herrschenden Lehre als widersinnig. Bisher war man davon ausgegangen, dass die Abscheideleistung von Stufe zu Stufe erhöht wird. Mit jeder Stufe wurde der Abstand der Abscheidelamellen reduziert, um noch kleinere Tropfen (kleiner Lamellenabstand = kleiner Grenztropfen) aus dem Rauchgasstrom zu filtern.

Nun wird erfindungsgemäß vorgeschlagen, einen Abscheider geringerer Abscheiderleistung als der vorherige Abscheider, vorzugsweise einen Rollenabscheider als Feinstabscheider bzw. letzte Abscheidestufe einzusetzen. Rollenabscheider sind bekanntermaßen schlechte Abscheider im Vergleich zu Lamellenabscheidern bei kleinen Tropfen. Damit ist dessen Einsatz als letzte Abscheiderstufe ein Widerspruch zur herrschenden Lehre, nach der der letzte Abscheider die beste Abscheideleistung zu erbringen hat.

Die Erfindung hat erkannt, dass die herrschende Lehre, nach der die Abscheideleistung von Stufe zu Stufe erhöht werden muss, in eine Sackgasse führt. Sie hat nämlich nicht erkannt, dass ab einer bestimmten Abscheideleistung bei feststoffbeladenen Gasen das unvermeidliche Waschen eine größere Emission verursacht, als die Steigerung der Abscheideleistung die Emission verringert.

Anders formuliert: Da eine Steigerung der Abscheideleistung in der letzten Stufe zu sehr geringen Abständen der Abscheiderlamellen führt, sind diese Abscheider sehr verschmutzungsanfällig und müssen häufig gewaschen werden. Durch die Verstopfung und dann das Waschen entsteht massiver Überriss, der mehr Emissionen verursacht als die Abscheiderstufe mit der erhöhten Reinigungsleistung aus dem Rauchgas herausfiltert.

Die erfindungsgemäße Lösung geht deshalb den umgekehrten Weg. Es wurde erkannt, dass das Waschen ab einer bestimmten Abscheideleistung des Gesamtsystems den größeren Teil der Emissionen verursacht und die Verschmutzung den anderen Teil. Insbesondere beim Nasskamin führt dies nicht nur zu hohen Emissionen sondern auch zu unangenehmen Nebenfolgen (sichtbare Emissionen als Schornsteinregen).

Eine erste dem erfindungsgemäßen Abscheidersystem zugrunde liegende Aufgabe ist deshalb, eine Lösung zu finden, bei der die letzte Abscheidestufe nicht gewaschen werden muss. Als Lösung wird erkannt, dass diese Aufgabe durch einen Abscheider mit einer schlechteren Abscheideleistung gelöst werden kann.

Eine zweite Aufgabe ist, eine Lösung zu finden, die trotz keines Waschens nicht so verschmutzt, dass sich der Druckverlust stark aufbaut und weiter die verschmutzte Lamelle für Emissionen sorgt.

Der Rollenabscheider ist bekannt dafür, dass er auch bei langem Betrieb ohne Waschen entweder völlig sauber bleibt oder nur geringfügig verschmutzt. Und diese Verschmutzung der Rollen hat so gut wie keinen Einfluss auf die Abscheideleistung. Überraschenderweise hat sich gezeigt, dass er trotz seiner im Vergleich zu Lamellenabscheidern geringe Abscheideleistung als letzte Abscheidestufe vor dem Schornstein oder der Wiederaufheizung gut geeignet ist. Eine mögliche Erklärung hierfür ist die folgende:

Es ist die Hauptfunktion des letzten Abscheiders, die mitgerissenen Waschtropfen des vorher liegenden Abscheiders abzufangen und abzuscheiden. Diese Waschtropfen sind eher große bis sehr große Tropfen. Der Rollenabscheider scheidet insbesondere bei großen Tropfen gut ab. Seine Schwäche sind die kleinen Tropfen. Der Rollenabscheider als letzte Abscheider ist also für diesen Einsatzzweck durchaus geeignet und leistungsfähig.

Es hat sich überraschenderweise gezeigt, dass der Nachteil, dass die kleinen Tropfen, die es durch die vorgelagerten Abscheidestufen geschafft haben, dann nicht abgeschieden werden, nicht bedeutsam ist. Denn an der Flüssigkeitsmenge, die diesen Rollenabscheider erreicht, haben diese kleinen Tropfen offenbar nur einen relativ kleinen Teil - das Volumen ist relativ klein. Je nach Waschfrequenz sind 90% bis 99% der Flüssigkeitsmenge Überriss aus dem Waschvorgang der vorgelagerten Abscheidestufe.

Das erfindungsgemäße Abscheidesystem kann mit drei, vier oder mehr Abscheidestufen gebaut werden. Vorzugsweise hat das Abscheidesystem drei oder vier Abscheidestufen, es sind aber auch mehr als vier Stufen denkbar.

Das Abscheidesystem kann für den vertikalen wie für den horizontalen Gasstrom gebaut werden und auch für einen Gasstrom, der zwischen den Abscheidestufen die Richtung wechselt oder schräg gerichtet ist. Es gibt Anlagen, die einen Grobabscheider im vertikalen Gasstrom (interner Abscheider) und den Feinabscheider im horizontalen Gasstrom (externer Abscheider im separaten Gehäuse) eingebaut haben.

Es können alle Arten der bekannten Abscheider eingesetzt werden - zum Beispiel Rollenabscheider (horizontal oder vertikal angeströmt), Lamellenabscheider (horizontal angeströmt), dachförmige oder flache Lamellenabscheider (vertikal angeströmt), dachförmige oder flache Rollenabscheider (vertikal angeströmt) oder andere Bauformen von Prallkörpern.

In den folgenden Bildern werden beispielhaft einige der möglichen Kombinationen aus diesen unterschiedlichen Bauformen dargestellt.

### Beschreibung

In der Zeichnung sind - rein schematisch - Ausführungsformen des erfindungsgemäßen Abscheidesystems dargestellt. Es zeigen:
- Fig. 1: ein dreistufiges Abscheidesystem im vertikalen Gasstrom;
- Fig. 2: ein vierstufiges Abscheidesystem im vertikalen Gasstrom;
- Fig. 3: ein dreistufiges Abscheidesystem im horizontalen Gasstrom, wobei die einzelnen Abscheider nicht im Einzelnen dargestellt sind;
- Fig. 4: ein Abscheidesystem mit einer Kombination von vertikal und horizontal angeströmten Abscheidern sowie
- Fig. 5: ein zweistufiges Abscheidesystem im vertikalen Gasstrom.

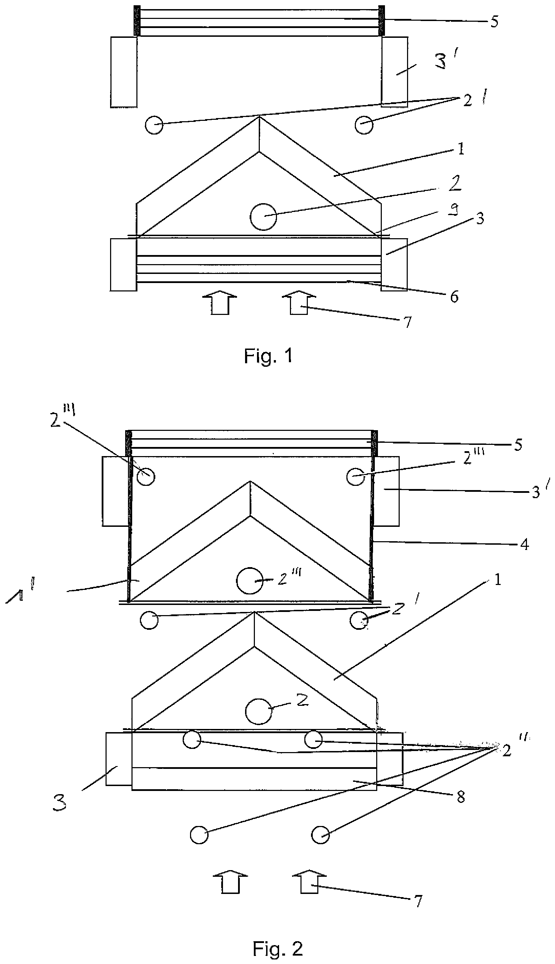

Das in Fig. 1 dargestellte, dreistufige Abscheidesystem ist zur Verwendung in einem vertikalen, gemäß Fig. 1 von unten nach oben gerichteten, mit den Pfeilen 7 symbolisierten Gasstrom vorgesehen. Es umfasst - in Richtung des Gasstroms gesehen - einen als Rollenabscheider ausgebildeten Grobabscheider 6, welcher an einer Stützkonstruktion 3 gelagert ist. Dieser Grobabscheider 6 dient insbesondere der Abscheidung großer Wassertropfen.

Oberhalb des Grobabscheiders 6 - in Richtung des Gasstroms gesehen hinter dem Grobabscheider 6 - ist ein als Lamellenabscheider ausgebildeter Feinabscheider 1 angeordnet. Er stützt sich auf derselben Stützkonstruktion 3 wie der Grobabscheider 6 ab.

Zwischen dem Grobabscheider 6 und dem Feinabscheider 1 ist eine Wascheinrichtung 2 vorgesehen, mittels welcher der Feinabscheider 1 von unten mit Waschflüssigkeit - meist Wasser - bedüsbar ist. Die Wascheinrichtung 2 ist an einem Querträger 9 befestigt. Oberhalb des Feinabscheiders 1 sind zwei weitere Waschvorrichtungen 2' angeordnet, die der Waschbedüsung des Feinabscheiders 1 von oben dienen.

Auf einer weiteren Stützkonstruktion 3' gelagert ist oberhalb der Wascheinrichtung 2' ein als Rollenabscheider ausgebildeter Schlussabscheider 5 vorgesehen, welcher eine geringere Abscheideleistung im Vergleich zum Feinabscheider 1 aufweist.

Bei der Beschreibung des nachfolgenden, weiteren Ausführungsbeispiels des erfindungsgemäßen Abscheidesystems werden in ihrer Funktion bereits anhand von Fig. 1 beschriebene Bauteile bzw. Komponenten mit denselben Bezugszeichen versehen.

Das in Fig. 2 dargestellte, vierstufige Abscheidesystem befindet sich wiederum in einem von unten nach oben gerichteten, vertikalen Gasstrom 7. Es umfasst einen Flachabscheider 8, der mit Hilfe von in Gasströmrichtung davor und dahinter befindlichen Wascheinrichtungen 2, 2' mit Waschflüssigkeit bedüsbar ist.

Der Flachabscheider 8 ist wiederum an einer Zwischenkonstruktion 3 befestigt, wie auch ein oberhalb angeordneter erster, als Lamellenabscheider ausgebildeter Feinabscheider 1. Zur Bedüsung mit Waschflüssigkeit sind wiederum Wascheinrichtungen 2, 2' in einer Anordnung vorgesehen, die derjenigen des in Fig. 1 dargestellten Ausführungsbeispiels entspricht.

In Gasströmungsrichtung hinter, d.h. oberhalb des ersten Feinabscheiders 1 ist ein zweiter Feinabscheider 1' angeordnet, welcher ebenfalls als Lamellenabscheider ausgebildet ist. Er ist, wie auch die zu seiner Reinigung vorgesehenen Wascheinrichtungen 2'" an einer weiteren Zwischenkonstruktion 3' angebracht.

Oberhalb dieses Feinabscheiders 1' ist wiederum ein Schlussabscheider 5 vorgesehen, der als Rollenabscheider ausgebildet ist.

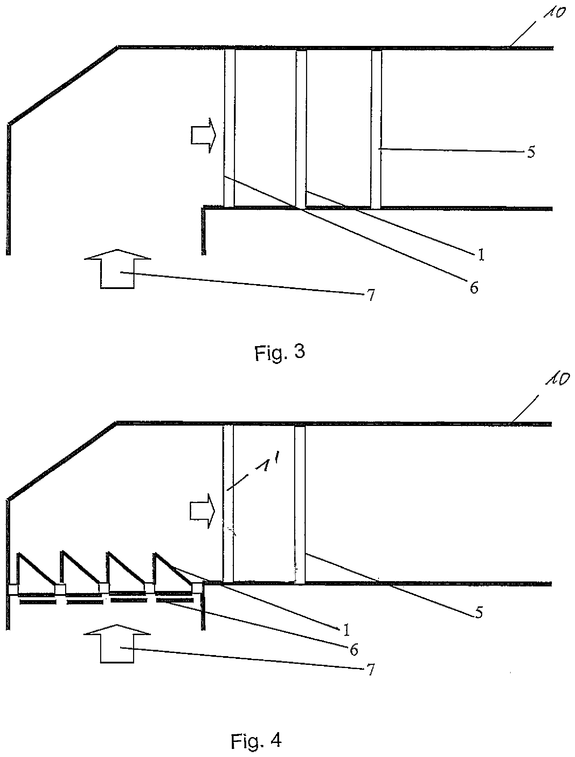

Bei beiden zuvor beschriebenen Ausführungsbeispielen befindet sich das erfindungsgemäße Abscheidesystem in einem vertikalen Gasfluss. Bei den in Fig. 3 und 4 dargestellten Ausführungsbeispielen wird der Gasstrom jedoch mit Hilfe eines entsprechend ausgebildeten Gehäuses 10 horizontal umgelenkt.

Bei dem in Fig. 3 dargestellten Ausführungsbeispiel befinden sich der Grobabscheider 6, der Feinabscheider 1 und der Schlussabscheider 5 in einem Gehäusebereich, in welchem ein im Wesentlichen horizontaler Gasstrom vorherrscht. Wie bei den beiden zuvor beschriebenen Ausführungsbeispielen können der Grobabscheider 6 beispielsweise als Flach- oder Rollenabscheider, der Feinabscheider 1 beispielsweise als Lamellenabscheider und der Schlussabscheider 5 beispielsweise wiederum als Rollenabscheider ausgebildet sein.

Bei dem in Fig. 4 dargestellten Ausführungsbeispiel handelt es sich um eine weitere Variante eines erfindungsgemäßen Abscheidesystems. Bei diesem System sind sowohl der Grobabscheider 6, als auch ein erster Feinabscheider 1 in einem Bereich des Gehäuses 10 angeordnet, in welchem der im Wesentlichen vertikale Gasstrom vorherrscht.

Ein in Gasströmrichtung nachfolgender, weiterer Feinabscheider 1' und ein Schlussabscheider 5 sind in einem Bereich des Gehäuses 10 angeordnet, in welchem eine horizontale Gasströmrichtung vorherrscht.

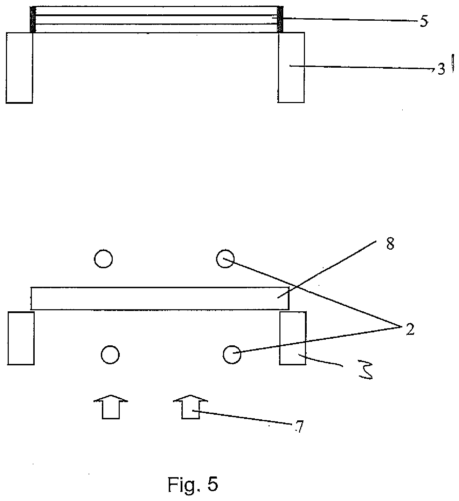

Das in Fig. 5 dargestellte Ausführungsbeispiel zeigt ein lediglich zweistufiges, erfindungsgemäßes Abscheidesystem im vertikalen Gasstrom 7. Es umfasst einen auf einer ersten Stützkonstruktion 3 gelagerten Grobabscheider 8, der als Flachabscheider ausgebildet ist. Für seine Reinigung sind Wascheinrichtungen 2 bezüglich der Gasströmrichtung vor und dahinter angeordnet. An einer oberhalb des Grobabscheiders 8 vorgesehenen, zweiten Stützkonstruktion 3' ist bereits der Schlussabscheider 5, der wiederum als Rollenabscheider ausgebildet ist, angeordnet. Aufgrund der bei dem Ausführungsbeispiel gemäß Fig. 5 fehlenden Feinabscheider weist dieses Ausführungsbeispiel eine geringere Gesamtabscheidungsleistung als die zuvor beschriebenen auf.

## Patentansprüche

1. Abscheidesystem zur Abscheidung von Tropfen aus einer Rauchgasströmung zum Einbau in einen Gaswäscher von Kraftwerken oder Verbrennungsanlagen,
mit einem in Gasströmrichtung (7) vorderen Grobabscheider (6, 8),
und mit einem in Gasströmrichtung (7) hinteren Schlussabscheider (5),
wobei in Gasströmrichtung (7) zwischen dem Grobabscheider (6, 8) und dem Schlussabscheider (5) mindestens ein Feinabscheider (1, 1') angeordnet ist,
wobei der Feinabscheider ein Lamellenabscheider (1) ist, der flach gelegte, dachförmige, V-förmige, bezüglich der Gasströmrichtung (7) schräg gestellte und/oder vertikal stehende Lamellenpakete umfasst, wobei mindestens eine Wascheinrichtung (2, 2', 2", 2"') vorgesehen ist, mit der der Grob- und auch der oder die Feinabscheider während des Betriebs des Gaswäschers gereinigt werden können,
**dadurch gekennzeichnet, dass** der Schlussabscheider (5) derart ausgebildet ist, dass er im Vergleich zu dem in Gasströmrichtung (7) vorherigen Abscheider (8, 1,1') eine geringere Abscheideleistung aufweist und als Rollenabscheider ausgebildet ist, wobei der Schlussabscheider (5) die letzte Abscheiderstufe ist.

2. Abscheidesystem nach Anspruch 1, **dadurch gekennzeichnet, dass** der Grobabscheider als Rollenabscheider (6) ausgebildet ist.

3. Abscheidesystem nach Anspruch 1, **dadurch gekennzeichnet, dass** der Grobabscheider als Flachabscheider (8) ausgebildet ist.

4. Abscheidesystem nach einem der Ansprüche 1 bis 3, **dadurch gekennzeichnet, dass** der Schlussabscheider (5) ein Rollenabscheider mit mindestens zwei in Gasströmrichtung (7) nacheinander folgenden Rohrebenen ist.

5. Abscheidesystem nach Anspruch 4, **dadurch gekennzeichnet, dass** die Rohre der verschiedenen Rohrebenen senkrecht zur Gasströmrichtung (7) versetzt sind.

6. Abscheidesystem nach Anspruch 5, **dadurch gekennzeichnet, dass** die Rohre der verschiedenen Rohrebenen in Gasströmrichtung (7) gesehen einander überlappen.

## Claims

1. A separation system for separating drops from a flue gas flow for installation in a gas scrubber of power plants or incineration plants,
having a front coarse separator (6, 8) in the gas flow direction (7),
and having a rear final separator (5) in the gas flow direction (7),
wherein at least one fine separator (1, 1') is arranged between the coarse separator (6, 8) and the final separator (5) in the gas flow direction (7),
wherein the fine separator is a plate separator (1), which comprises plate packets which are flat, roof-shaped, V-shaped, angled with respect to the gas flow direction (7) and/or vertical, wherein at least one washing device (2, 2', 2", 2"'), with which the coarse and also the fine separator or separators can be cleaned during operation of the gas scrubber, is provided,
**characterized in that**
the final separator (5) is designed such that it has a lower separation performance in comparison with the preceding separator (8, 1, 1') in the gas flow direction (7) and is designed as a tube separator, wherein the final separator (5) is the last separator stage.

2. The separation system according to claim 1, **characterized in that** the course separator is designed as a tube separator (6).

3. The separation system according to claim 1, **characterized in that** the course separator is designed as a flat separator (8).

4. The separation system according to one of claims 1 to 3, **characterized in that** the final separator (5) is a tube separator having at least two successive tube levels in the gas flow direction (7).

5. The separation system according to claim 4, **characterized in that** the tubes of the different tube levels are offset perpendicular to the gas flow direction (7).

6. The separation system according to claim 5, **characterized in that** the tubes of the different tube levels overlap one another viewed in the gas flow direction (7).

## Revendications

1. Système de séparation pour la séparation de gouttes d'un écoulement de gaz de fumée à monter dans un laveur de gaz de centrales électriques ou d'incinérateurs,
avec un séparateur grossier (6, 8) avant dans la direction d'écoulement de gaz (7),
et avec un séparateur final (5) arrière dans la direction d'écoulement de gaz (7),
dans lequel au moins un séparateur fin (1,1') est agencé entre le séparateur grossier (6, 8) et le séparateur final (5) dans la direction d'écoulement de gaz (7), dans lequel le séparateur fin est un séparateur à lamelles (1), qui comprend des paquets de lamelles en position verticale et/ou placés de manière inclinée par rapport à la direction d'écoulement de gaz (7), en forme de V, en forme de toit, posés à plat, dans lequel au moins un équipement de lavage (2, 2', 2", 2"') est prévu, avec lequel le séparateur grossier et le ou les séparateurs fins peuvent être nettoyés pendant le fonctionnement du laveur de gaz,
**caractérisé en ce que** le séparateur final (5) est réalisé de telle sorte qu'il présente une performance de séparation plus faible par rapport à celle du séparateur (8, 1, 1') précédent dans la direction d'écoulement de gaz (7) et est réalisé sous forme de séparateur à rouleaux, dans lequel le séparateur final (5) est le dernier niveau de séparateur.

2. Système de séparation selon la revendication 1, **caractérisé en ce que** le séparateur grossier est réalisé sous forme de séparateur à rouleaux (6).

3. Système de séparation selon la revendication 1, **caractérisé en ce que** le séparateur grossier est réalisé sous forme de séparateur plat (8).

4. Système de séparation selon l'une quelconque des revendications 1 à 3, **caractérisé en ce que** le séparateur final (5) est un séparateur à rouleaux avec au moins deux niveaux de tuyaux successifs dans la direction d'écoulement de gaz (7).

5. Système de séparation selon la revendication 4, **caractérisé en ce que** les tuyaux des différents niveaux de tuyaux sont décalés perpendiculairement à la direction d'écoulement de gaz (7).

6. Système de séparation selon la revendication 5, **caractérisé en ce que** les tuyaux des différents niveaux de tuyaux se chevauchent vu dans la direction d'écoulement de gaz (7).
